# NEUE EUROPÄISCHE PATENTSCHRIFT

(11) **EP 0 745 143 B2**
(45) Veröffentlichungstag und Bekanntmachung des Hinweises auf die Entscheidung über den Einspruch: **25.09.2002**
(45) Hinweis auf die Patenterteilung: 29.09.1999
(21) Anmeldenummer: 95938305.0
(22) Anmeldetag: 07.12.1995
(51) Int. Cl.: C21C 1/02

(54) **MITTEL UND SEINE VERWENDUNG ZUR BEHANDLUNG VON ROHEISEN- UND GUSSEISENSCHMELZEN ZUM ZWECK DER ENTSCHWEFELUNG**
AGENT AND ITS USE FOR TREATING PIG OR CAST IRON MELTS FOR DESULPHURISATION PURPOSES
AGENT ET APPLICATION DE TRAITEMENT DE FONTES DE PREMIERE OU DE DEUXIEME FUSION DE FER A DES FINS DE DESULFURATION

(30) Priorität: 09.12.1994 AT 229994
(43) Veröffentlichungstag der Anmeldung: 04.12.1996
(73) Patentinhaber: Donau Chemie Aktiengesellschaft, 1030 Wien (AT)
(72) Erfinder: WIESBÖCK, Rainer, A-3452 Trasdorf (AT); SOTRIFFER, Albrecht, A-1160 Wien (AT); ZIMMERMANN, Johann, A-6574 Pettneu am Arlberg (AT)
(74) Vertreter: Schober, Elisabeth, Dipl.-Ing.Dr.techn.
(86) Internationale Anmeldenummer: AT9500242
(87) Internationale Veröffentlichungsnummer: WO96017963

(56) Entgegenhaltungen:
- EP-A- 0 226 994
- EP-A- 0 530 552
- EP-A- 0 602 540
- EP-A- 1 582 970
- BE-A- 895 936
- FR-A- 1 314 560
- US-A- 2 933 796
- US-A- 3 998 625
- PATENT ABSTRACTS OF JAPAN PATENT ABSTRACTS OF JAPAN vol. 003 no. 075 (C-050) ,27.Juni 1979 vol. 003 no. 075 (C-050) ,27.Juni 1979 & JP,A,54 050417 (DENKI KAGAKU KOGYO KK) & JP,A,54 050417 (DENKI KAGAKU KOGYO KK) 20.April 1979, 20.April 1979,
- PATENT ABSTRACTS OF JAPAN PATENT ABSTRACTS OF JAPAN vol. 004 no. 129 (C-024) ,10.September vol. 004 no. 129 (C-024) ,10.September 1980 1980 & JP,A,55 082708 (DENKI KAGAKU KOGYO KK) & JP,A,55 082708 (DENKI KAGAKU KOGYO KK) 21.Juni 1980, 21.Juni 1980,
- Grand Larousse en 5 volumes, tome 1, Mars Grand Larousse en 5 volumes, tome 1, Mars 1994, p. 368 1994, p. 368
- Hawley's Condensed Chemical Dictionary, Hawley's Condensed Chemical Dictionary, 12th Ed., 1993, p. 533 12th Ed., 1993, p. 533

## Beschreibung

Die Erfindung betrifft ein Mittel zur Behandlung von Roheisen- und Gußeisenschmelzen zum Zwecke der Entschwefelung.

Bei den bisher üblichen Entschwefelungsmitteln auf Basis von techn. Calciumcarbid (ca. 60 - 80% reines Calciumcarbid), Calciumcarbid-Magnesium-Mischungen bzw. Calciumcarbid-Kalk-Mischungen sind folgende Anwendungskriterien zu beobachten:
- Es treten eine teilweise schlechte Trennbarkeit der Schlacke von der Roheisen- oder Gußeisenschmelze und damit verbunden Eisenverluste beim Abschlacken auf.
- Beim Einblasverfahren über Tauchlanzen in Torpedo- oder Rohrpfannen entstehen zum Teil starke Anlagerungen in den Pfannen. Diese Anlagerungen beeinträchtigen die Entschwefelungswirkung, verringem das Transportvolumen und machen daher eine Extrabehandlung dieser Pfannen in gewissen Zeitintervallen notwendig.
- Beim Verfahren mit Rührern in Einleer- oder Umfüllpfannen zum Zwecke der Entschwefelung entstehen bei Einsatz von Calciumcarbid oder Kalk Anlagerungen an der Pfannenwand, die die Calciumcarbid - bzw. Kalkausnützung beeinträchtigen.

Darüber hinaus liegt die Carbidausnützung, gerechnet auf Gehalt an reinem Calciumcarbid, bei diesen Verfahren allgemein nur zwischen ca. 10 - 40%. Verbesserungen können beispielsweise bei Verfahren mit Eintauchlanzen durch eine teure Vermahlung des Calciumcarbids auf sehr kleine Komfeinheiten erreicht werden. Schmelzpunktserniedrigungen durch Steuerung der Calciumcarbidherstellung in Richtung eutektischer Zusammensetzung (ca. 65% reines Calciumcarbid) bringen ebenfalls keine relevante Steigerung bei der Carbidausnützung und keine Verbesserungen bei der Schlackenkonsistenz.

Es ist daher ein Ziel der vorliegenden Erfindung, ein Mittel zur Behandlung von Roheisen- und Gußeisenschmelzen zum Zwecke der Entschwefelung bereitzustellen, bei dessen Verwendung die aus der Technik bekannten Probleme überwunden werden.

Dieses Ziel wird erfindungsgemäß durch ein Mittel erreicht, welches 15 bis 95 Gew.% Calciumcarbid und/oder Calciumoxid sowie gegebenenfalls 5 - 50 Gew.-% Magnesium und/oder gegebenenfalls 1 - 10 Gew.-% eines Kohlenstoffträgers, wie Petrolkoks, Kohlestaub, Steinkohle, Holzkohlenkoks, Koksmehl oder Graphitstaub, und als Rest mindestens 5 Gew.-% einer Asche aus Biomassefeuerungen, wie Holzasche, Grobasche, Bettasche, Flugasche oder Brennraumasche enthält.

Durch den Zusatz von Asche aus Biomassefeuerungen zum Calciumcarbid wird die Carbidausnützung, gerechnet auf Gehalt an reinem Calciumcarbid, verbessert. In Abhängigkeit vom Anwendungsverfahren kann die Carbidausnutzung auf Werte über 40% verbessert werden (siehe Beispiele).

Weitere Verbesserungen bei der Anwendung des erfindungsgemäßan Mittels sind:
- Eine positive Beeinflussung der Trennbarkeit der Schlakke von der Roheisen- oder Gußeisenschmelze und damit verbunden geringere Eisenverluste beim Abschlacken.
- Sowohl beim Einblasverfahren über Tauchlanzen als auch bei den Verfahren mit Rührem in Einleeroder Umfüllpfannen enstehen in den Torpedopfannen bzw. in den Einleer- oder Umfüllpfannen geringere Ablagerungen in den Pfannen bzw. geringere Anlagerungen an den Pfannenwänden.

Diese durch das erfindungsgemäße Mittel erzielbaren Verbesserungen bei den Verfahren zur Entschwefelung von Roh- und Gußeisenschmelzen beruhen auf dem Zusatz von Asche aus Biomassefeuerungen, wobei u.a. deren Zusammensetzung, insbesondere das Verhältnis von Kalium- und Natriumoxid zu Calcium-, Magnesium- und Siliciumoxid in der Asche aus Biomassefeuerungen, von Bedeutung ist. Dabei hat sich folgendes Verhältnis bewährt ein Gehalt von Kalium- und Natriumoxid im Bereich von 5 - 40 Gew.-% und ein Gehalt von Calcium-, Magnesium- und Siliziumoxid im Bereich von 10 - 85 Gew.-%. Welche Asche aus Bicmassefeuerungen für welches Verfahren besser geeignet ist, kann durch Versüche abgeklärt und auf das jeweilige Verfahren abgestimmt werden. Durch Vorbehandlung der Asche aus Biomassefeuerungen ist es jedoch möglich, das Verhältnis der Oxidzusammensetzung zu beeinflussen.

Neben der Zusammensetzung der Asche aus Biomassefeuerungen ist auch deren Schmelzverhalten für die Beeinflussung der Entschwefelung entscheidend. Die Asche aus Biomassefeuerungen haben Erweichungspunkte von ca. 750 -1400°C. Je niedriger der Erweichungspunkt ist, desto früher ist bei der Anwendung mit Calciumcarbid ein die Entschwefelung fördender Einfluß gegeben.

Das trifft vor allem auf Verfahren zu, bei denen die Roh- oder Gußeisenschmelzen mit niedriger Temperatur zur Entschwefelung gelangen. So ist bekannt, daß die Entschwefelung mit Calciumcarbid unter ca. 1350°C Roh- oder Gußeisentemperatur einen schlechten Wirkungsgrad aufweist.

Das normale technische Calciumcarbid mit ca. 60 - 80 Gew.-% CaC₂ besitzt abhängig von den Verunreinigungen einen Schmelzpunkt von ca. 1800 - 1900°C. Damit ist bei den üblichen Temperaturen der Entschwefelung mit Calciumcarbid von Roh- oder Gußeisenschmelzen von ca. 1300 bis 1450°C nur eine fest/flüssig Reaktion möglich. Wenn dem Calciumcarbid eine Komponente vor der Anwendung zugemischt wird, die in der Roh- oder Gußeisenschmelze schnell flüssig wird, so fördert dies die fest/flüssig Reaktion des Calciumcarbids mit dem Schwefel in den Roh- und Gußeisenschmelzen.

Darüber hinaus fällt die Asche aus Biomassefeuerungen meist in sehr feiner Form an, sodaß für die Anwendung normalerweise keine Vermahlung oder Siebung erforderlich ist. Zu den technischen Verbeserungen, die der Gehalt an Asche aus Biomassefeuerungen in dem erfindungsgemäßen Mittel bringt, kommt noch der wirtschaftliche Vorteil, daß die Asche aus Biomassefeuerungen preisgünstig zur Verfügung steht.

Bei den Einblasverfahren über die Eintauchlanze hat sich gezeigt, daß ein Gehalt an einem Kohlenstoffträger im erfindungsgemäßen Mittel das Zuwachsen der Lanzenaustrittsöffnungen verhindert. Dazu kann Petrolkoks, Kohlestaub, Steinkohle, Holzkohlenkoks, Koksmehl oder Graphitstaub verwendet werden.

Die Herstellung des erfindungsgemäßen Mittels kann in bekannter Weise in einem Zwangsmischer oder durch gemeinsame Vermahlung bzw. durch eine Kombination beider Methoden erfolgen.

Die Erfindung wird mit den folgenden Beispielen erläutert:

### BEISPIEL 1

Bei mehreren Entschwefelungsbehandlungen in Pfannen mit einem Inhalt von 1 - 3t Gußeisenschmelzen mit Rührer wurde ein Gemisch von 75% niedrigschmelzendem Calciumcarbid (ca. 65% reines Calciumcarbid) und 25% Asche aus Biomassefeuerungen eingebracht. Bei Schwefelanfangsgehalten von 0,08 - 0,12% wurden Schwefelendwerte von durchwegs unter 0,004% erreicht. Die Schlackenablagerungen an der Pfanne waren geringer als bei den üblichen Behandlungen mit Calciumcarbid allein. Es wurde daher bei einem durchschnittlichen Einsatz von 1,5 t Gußeisen pro Behandlung und einem durchschnittlichen Verbrauch von 7,8 kg/t Entschwefelungsmittel eine Carbidausnützung von ca. 52% erreicht.

### BEISPIEL 2

Bei mehreren Entschwefelungsbehandlungen in Pfannen mit einem Inhalt von 30 - 35 t Gußeisenschmelzen mit Rührer wurde ein Gemisch von 60% Calciumcarbid (ca. 78% reines Calciumcarbid), 15% Kalk und 25% Asche aus Biomassefeuerungen eingebracht. Bei Schwefelanfangsgehalten von 0,12 - 0,17% wurden Schwefelendwerte von durchwegs unter 0,006% erreicht. Die Schlackenablagerungen an der Pfanne waren geringer als bei Behandlungen mit Calciumcarbid oder Kalkallein. Es wurde daher bei einem durchschnittlichen Einsatz von 32,4 t Gußeisen pro Behandlung und einem durchschnittlichen Verbrauch von 13,2 kg/t Entschwefelungsmittel eine Carbidausnützung von ca. 48% erreicht.

### BEISPIEL 3

Über eine Tauchlanze wurden Gemische mit 75% Calciumcarbid (75% reines Calciumcarbid) mit 20% Asche aus Biomassefeuerungen und 5% Steinkohlenstaub in Torpedopfannen mit 150 - 200 t Roheisenschmelzen eingeblasen. Bei Ausgangsschwefelgehalten von 0,04 - 0,06% wurde ein Durchschnitt von 0,005% Schwefelendwert erreicht. Die Schlackenablagerungen in den Torpedopfannen waren gegenüber Behandlungen mit Calciumcarbid allein bzw. Carbid/Kalkmischungen geringer. Es wurde bei einem durchschnittlichen Einsatz von 173 t Roheisen pro Behandlung und einem durchschnittlichen Verbrauch von 5,9 kg/t Entschwefelungsmittel eine Carbidausnützung von 29% erreicht.

### BEISPIEL 4

Über eine Tauchlanze wurden Gemische mit 70% Calciumcarbid (75% reines Calciumcarbid) mit 20% Asche aus Biomassefeuerungen mit 5% Magnesium und 5% Koksmehl in Umfüllpfannen mit 250 - 280 t Roheisenschmelzen eingeblasen. Bei Ausgangsschwefelwerten von 0,02 - 0,04% wurde ein Durchschnitt von 0,005% Schwefelendwert erreicht. Die Schlacke konnte mit wenig Eisenverlusten von der Pfanne abgezogen werden. Es wurde bei einem durchschnittlichen Einsatz von 264 t Roheisen pro Behandlung und einem durchschnittlichen Verbrauch von 2,6 kg/t Entschwefelungsmittel eine Carbidausnützung von ca. 30% erreicht.

## Patentansprüche

1. Mittel zur Behandlung von Roh- und Gußeisenschmelzen zum Zwecke der Entschwefelung, welches 15 - 95 Gew.-% Calciumcarbid und/oder Calciumoxid sowie gegebenenfalls 5 - 50 Gew.-% Magnesium und/oder gegebenenfalls 1 - 10 Gew.-% eines Kohlenstoffträgers, wie Petrolkoks, Kohlestaub, Steinkohle, Holzkohlenkoks, Koksmehl oder Graphitstaub, und als Rest mindestens 5 Gew.-% einer Asche aus Biomassefeuerungen, wie Holzasche, Grobasche, Bettasche, Flugasche oder Brennraumasche enthält.

2. Mittel nach Anspruch 1, **dadurch gekennzeichnet, daß** die Asche aus Biomassefeuerungen einen Gehalt an Kalium- und Natriumoxid von 5 - 40 Gew.-% und einen Gehalt an Calciumoxid, Magnesiumoxid und Siliciumoxid von 10- 85 Gew.-% aufweist.

3. Mittel nach Anspruch 1 oder 2, **dadurch gekennzeichnet, daß** es eine Korngröße unter 5 mm besitzt.

## Claims

1. Agent for treating pig and cast iron melts for the purpose of desulphurisation containing 15 - 95 wt.% of calcium carbide and/or calcium oxide as well as optionally 5 - 50 wt.% of magnesium and/or optionally 1 - 10 wt.% of a carbon substrate, such as petroleum coke, coal dust, anthracite, charcoal coke, coke powder or graphite dust, and as the remainder at least 5 wt.% of an ash from firing of biomass, such as wood ash, coarse ash, bed ash, fly ash or combustion chamber ash.

2. Agent according to claim 1, **characterised in that** the ash from firing of biomass has a content of potassium and sodium oxide of 5 - 40 wt.% and a content of calcium oxide, magnesium oxide and silicon oxide of 10 - 85 wt.%.

3. Agent according to claim 1 or 2, **characterised in that** it has a grain size below 5 mm.

## Revendications

1. Agent de traitement de fontes de fer de première et de deuxième fusion en vue de leur désulfuration, cet agent contient 15 à 95% en poids de carbure de calcium et/ou d'oxyde de calcium, ainsi que, le cas échéant, 5 à 50% en poids de magnésium et/ou, le cas échéant, 1 à 10% en poids d'un support de carbone, comme du coke de pétrole, du poussier de charbon, de la houille, du coke de charbon de bois, de la farine de coke ou de la poussière de graphite, et, pour le reste, au moins 5% en poids d' une cendre d'incinération de biomasse, comme de la cendre de bois, de la cendre grossière, de la cendre de ballast, de la cendre volante ou de la cendre de chambre de combustion.

2. Agent suivant la revendication 1, **caractérisé en ce que** la cendre provenant de l'incinération de biomasse présente une teneur en oxyde de potassium et de sodium de 5 à 40% en poids et une teneur en oxyde de calcium, oxyde de magnésium et oxyde de silicium, de 10 à 85% en poids.

3. Agent suivant l'une des revendications 1 ou 2, **caractérisé en ce que** cet agent présente une granulométrie inférieure à 5 mm.
